(19) Europäisches Patentamt / European Patent Office / Office européen des brevets

(11) **EP 4 177 536 A1**

(12) **EUROPEAN PATENT APPLICATION**

(43) Date of publication:
**10.05.2023   Bulletin 2023/19**

(21) Application number: **21206240.0**

(22) Date of filing: **03.11.2021**

(51) International Patent Classification (IPC):
*F24S 10/50* (2018.01)     *F24S 60/10* (2018.01)
*F24S 60/30* (2018.01)     *F24S 90/00* (2018.01)

(52) Cooperative Patent Classification (CPC):
**F24S 10/502; F24S 60/10; F24S 60/30; F24S 90/00**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Aella SA**
**8005 Zürich (CH)**

(72) Inventor: **TEPIC, Slobodan**
**8057 Zurich (CH)**

(74) Representative: **Weiss, Wolfgang**
**Weickmann & Weickmann**
**Patent- und Rechtsanwälte PartmbB**
**Postfach 860 820**
**81635 München (DE)**

(54) **IMPROVED CONVERSION OF SOLAR HEAT TO ELECTRICITY**

(57)    The present invention discloses a solar heat powerplant utilizing the full cycle of potential radiative heat exchange between the Sun, the Earth, and deep space. Utilization of radiative cooling during night hours combined with irradiation during the day provides approximately doubling of theoretical efficiency when compared with conventional solar power capture schemes without light concentration.

FIG 1

EP 4 177 536 A1

## Description

The present invention relates to a solar heat powerplant comprising a cold reservoir and a heat exchanger for radiative dry cooling of the cold reservoir and a method of operating said solar heat powerplant.

## Background

Recently, solar power conversion by photovoltaics (PV) has become the dominant method of utilizing solar energy- approximately 98% of current solar power generation is PV type. The wind share is about the same as PV. There is, however, a large misconception about how efficient PV systems are by using the nominal power ratings of most current solar panels that are 20% or higher, while the great majority of what is installed at this time is around 15% or lower, considering performance degradation with time. In a report (B. Shiva Kumar, K. Sudhakar, Performance evaluation of 10 MW grid connected solar photovoltaic power plant in India, Energy Reports 1 (2015) 184-192) from a relatively large PV facility in India, accounting for all other inefficiencies of the system, the net power produced is only 18% of what the PV panels can do under ideal test conditions (in that case 14%). Thus the "bottom line" of that facility is 2.5% (18 x 14%). The panels are washed twice a month - a lot of work and water is needed for that unaccounted detail in operational cost.

Two reports on PV systems in regions of moderate insolation are particularly damning in that they claim that "Energy Return on Energy Invested" in countries such as Germany and Switzerland is in fact negative with the current performance of PV (F. Ferroni, R.J. Hopkirk, Energy Return on Energy Invested (ERoEI) for photovoltaic solar systems in regions of moderate insolation, Energy Policy 94 (2016) 336-344, and F. Ferroni, A. Guekos, R.J. Hopkirk, Further considerations to: Energy Return on Energy Invested (ERoEI) for photovoltaic solar systems in regions of moderate insolation, Energy Policy 107 (2017) 498-505).

There has been a lot of talk in decades past (J.H. Anderson, J.H. Anderson JR, Sea water power plant, US 3,312,054 A) about ocean thermal energy conversion (OTEC) relying on the temperature differences between ocean surface waters and deep ocean waters, which is at even the best locations about 20 C. The ideal, Carnot efficiency of OTEC is thus less than 7%. Accounting for other losses involved brings this down to maybe 1% explaining why there is only one functional OTEC system in the world, operating in Japan as a demonstration of the principle (http://otecokinawa.com/en/Project/index.html).

A further option to utilize solar energy involves solar heat conversion to electricity in a solar heat powerplant relying on radiative heat exchange. Conventional solar heat powerplants are operated during daylight only. During night hours the process is idled. Small, as well as large scale facilities, run a thermal cycle of one or another type by absorbing the heat from solar irradiation on the hot side of the cycle and removing the residual heat into the atmosphere either directly (dry cooling) or if water is available, aided by water evaporation (wet cooling). In some, still rare instances thermal energy is stored for later use by e.g., melting a salt kept in insulated storage to allow operation at night, or even during a few days of e.g., poor conditions of solar irradiation.

Intermittency of wind-based electric power, as well as solar power generation by either photovoltaic solar panels or by conversion of heat into electricity, is a major, despite many proposals, still unresolved problem for the decarbonization of electrical power grid. With an increasing percentage of power production by either photovoltaic panels or wind, the problem of intermittency is creating bigger and bigger problems for grid management with frequent crises threatening major supply disruptions of electricity to all parts of the economy, as recently unfolding in China. Months of exceptionally weak winds in the north of Europe have led to the depletion of natural gas reserves causing alarms and panic over the prospect of cold winter.

It was an object of the present invention to provide an improved utilization of solar energy by heat conversion to electricity.

## Summary of the Invention

The present invention discloses a solar heat powerplant utilizing the full cycle of potential radiative heat exchange between the Sun, the Earth, and deep space. Utilization of radiative cooling during night hours combined with irradiation during the day provides approximately doubling of theoretical efficiency when compared with conventional solar power capture schemes without light concentration. Even if used only for improved dry cooling of a solar heat powerplants with light concentration, the present invention can still provide significant improvements in efficiency in the range of at least about 5%.

A first aspect of the present invention is a solar heat powerplant comprising:

- a first heat reservoir which is a cold reservoir,
- a second heat reservoir which is a hot reservoir,
- at least one heat exchanger adapted for radiative dry cooling of the cold reservoir and/or for radiative heating of the hot reservoir by absorbing solar irradiation, and
- a power generator which operates by extracting heat from the hot reservoir and transferring residual heat into the cold reservoir.

The solar heat powerplant comprises a first heat reservoir which is a cold reservoir and a heat exchanger adapted for radiative dry cooling of the cold reservoir.

Further, the solar heat powerplant comprises a second heat reservoir which is a hot reservoir and a heat exchanger adapted for radiative heating of the hot reservoir by absorbing solar irradiation.

Further, the solar powerplant comprises a power generator adapted for extracting heat from the hot reservoir and converting said heat into electricity whereby residual heat is transferred into the cold reservoir. The power generator typically comprises a working fluid, e.g., a liquid or a gas, for converting thermal energy directly or indirectly into electrical energy.

In certain embodiments, the power generator is a thermoelectric generator that is adapted for converting thermal energy directly into electrical energy. In further embodiments, the power generator is adapted for converting thermal energy into mechanical energy, e.g., hydraulic and/or pneumatic energy, which is then converted into electricity. In certain embodiments, the power generator comprises a screw-type expander, or a bladeless, Tesla-type turbine.

In certain embodiments, the working fluid is a non-aqueous fluid, for example, ammonia, or a halo-substituted hydrocarbon including, but not limited to a fluoro-substituted hydrocarbon such as R134A (1,1,1,2-tetrafluoroethane) or a mixture of such halo-substituted hydrocarbons such as R404A or any other suitable refrigerant.

In certain embodiments, the solar heat powerplant is adapted for operating the heat transfer between the heat exchanger for radiative cooling and the cold reservoir only when the temperature in the heat exchanger is lower, e.g., at least about 0.5°C, at least about 1°C or at least about 2°C lower than in the cold reservoir. Typically, the heat transfer between the heat exchanger for radiative cooling and the cold reservoir takes place during nighttime or a part of the night, e.g., about 8 to 12 h, particularly about 10 h, for example about 20:00 to about 06:00 h local time.

In certain embodiments, the solar heat powerplant is adapted for operating the heat transfer between the heat exchanger for radiative heating and the hot reservoir only when the temperature in the heat exchanger is higher, e.g., at least about 0.5°C, at least about 1°C or at least about 2°C higher than in the hot reservoir. Typically, the heat transfer between the heat exchanger for radiative heating and the hot reservoir takes place during daytime or a part of the day, e.g., e.g., about 8 to 12 h, particularly about 10 h, for example about 08:00 to about 18:00 h local time.

In certain embodiments, the cold reservoir, and the hot reservoir of the solar powerplant have a thermal capacity which is sufficient to support a continuous operation of the power generator during at least a full day (24 h) without solar irradiation, e.g., a cloudy day without direct solar irradiation, with at least about 70%, with at least about 80% or with at least about 90% of its nominal power.

The solar heat powerplant of the present invention comprises at least one heat exchanger adapted for radiative dry cooling of the cold reservoir and/or for radiative heating of the hot reservoir by absorbing solar irradiation.

In certain embodiments, the hot reservoir and the cold reservoir comprise a single heat exchanger allowing an alternating heat transfer between the heat exchanger and the hot reservoir during daytime and the heat exchanger and the cold reservoir during nighttime.

In further embodiments, the hot reservoir, and the cold reservoir each comprise a separate heat exchanger allowing an independent heat transfer between the heat exchanger and its respective hot or cold reservoir.

Typically, a heat reservoir, i.e., the cold reservoir and/or the heat reservoir, comprises a container comprising a reservoir fluid wherein the container is surrounded by a thermal insulation. The reservoir fluid may be, e.g., water optionally containing an anti-freezing agent and/or salt. The volume of the reservoir fluid may vary to a large extent, e.g., from about 1,000 L to about 1,000,000 L., preferably from about 10,000 L to about 200,000 L. In certain embodiments, the solar heat powerplant comprises large-capacity heat reservoirs. In certain embodiments, the volume of reservoir fluid is provided by the excavation of a depression, e.g., a circular depression in the ground.

In certain embodiments, the solar heat power plant has, depending on its dimensions, a power output from about 10 kW to about 100 MW, preferably from about 100 kW to about 10 MW.

The thermal insulation of a heat reservoir may be provided at least one layer of insulation material such as fiberglass, plastic foam like Styrofoam, mineral wool, or cellulose, enclosing the container with the reservoir fluid.

Typically, the reservoir fluid is separated from the thermal insulation material by a water-tight barrier. In certain embodiments, the reservoir further comprises a radiation cover, particularly above the reservoir fluid in order to inhibit radiation from entering or leaving the reservoir.

In certain embodiments, the heat exchanger is a radiative heat exchanger which is provided with thermal insulation except at its radiative surface, which may be present on its top. The radiative surface may be formed by a metal or a metal oxide element, e.g., plate or sheet, having high emissivity, e.g., an anodized aluminum sheet. In certain embodiments, the inner volume of a heat exchanger may be defined by a pattern of walls between the bottom thermal insulation and the top cover. These walls may also support the cover of the heat exchanger.

The heat exchanger typically comprises a heat storage fluid adapted for providing heat transfer. In certain embodiments, a heat transfer between a heat exchanger and the hot or cold reservoir may be provided by circulating the heat storage fluid, e.g., a closed-loop circulating heat storage fluid driven by a pump or any other suitable means. Heat transfer between the hot reservoir and the power generator may be provided by a circulating heat storage fluid, e.g., a closed-loop circulating heat storage fluid driven by a pump or any other suitable means between the hot reservoir and the power generator. Removal of rejected heat from the power generator to the cold reservoir may be provided by a circulating heat storage fluid, e.g., a closed-loop circulating heat storage fluid driven by a pump or any other suitable means between the power generator and the cold reservoir. Preferably, the heat storage fluid is water optionally containing an anti-freezing agent and/or a salt.

As outlined above, the solar heat powerplant comprises at least one heat exchanger adapted for radiative dry cooling of the cold reservoir and/or for radiative heating of the hot reservoir by absorbing solar irradiation.

In certain embodiments, the heat exchanger is a radiative heat exchanger adapted for directly transferring heat from the exterior of the powerplant to the hot reservoir and/or for directly transferring heat from the cold reservoir to the exterior of the powerplant. In these embodiments, the heat storage fluid within the radiative heat exchanger is in direct heat exchange contact with the fluid in the hot reservoir and/or the cold reservoir.

In certain embodiments, the solar powerplant comprises at least one primary heat exchanger, i.e., a radiative heat exchanger which is in direct contact with the exterior, and at least one secondary heat exchanger which is in contact with the primary heat exchanger and the hot and/or cold reservoir. A secondary heat exchanger is adapted for transferring heat between a primary heat exchanger and the hot reservoir and/or the cold reservoir. In such embodiments the heat storage fluid within the primary heat exchanger is separated (i.e., not in direct heat exchange contact) from the fluid in the hot reservoir and/or the cold reservoir.

In certain embodiments, the solar heat power plant is adapted for producing electricity only. In certain embodiments, particularly for use in houses or buildings, the hot reservoir of the solar heat power plant may be additionally adapted for heating applications, e.g., for heating water and/or indoor space. In certain embodiments, particularly for use in houses or buildings, the cold reservoir of the solar heat power plant may be additionally adapted for cooling applications, e.g., for cooling indoor space.

In certain embodiments, the heat exchanger is in the form of a panel comprising an upper element, e.g., plate or sheet, and a lower element, e.g., plate or sheet, wherein the upper element is made from a metal or a metal alloy, e.g., aluminum or an aluminum alloy of high emissivity, preferably an anodized, more preferably black painted aluminum or aluminum alloy, and the lower element is made from a metal or a metal alloy, e.g., aluminum or an aluminum alloy of high reflectivity, preferably a rolled or polished aluminum or aluminum alloy.

In certain embodiments, the solar heat powerplant of the present invention comprises a radiative heat exchanger adapted as a roof covering of a building, e.g., in a form of roof tiles or shingles, or in a form of a standing seam roofing, e.g., an aluminum roofing.

In certain embodiments, the solar powerplant further comprises means for providing concentrated solar heat irradiation to the heat exchanger, e.g., an arrangement of mirrors, e.g., parabolic mirrors, and/or lenses. Suitable concentration factors range from 10 for a linear Fresnel reflector to several thousand, e.g., about 10,000 for a solar power tower with tracking mirrors. According to the present invention, the means for concentrated heating can be operated bi-directionally to provide concentrated cooling. In certain embodiments, the solar heat powerplant further comprises irradiation concentration means for providing concentrated heat irradiation to a heat hot exchanger, and/or for providing concentrated heat emission, i.e., cooling, from a heat exchanger.

In particular embodiments, the solar heat powerplant further comprises at least one radiative heat exchanger comprising means for concentrated heating and means for concentrated cooling.

While all known concentrated solar heat powerplants are used for radiative heating only, the present invention can be adopted to reverse the heat flux and use the same system for radiative cooling. Use of at least a cold reservoir is required for this to work so that the cold reservoir fluid (e.g., water with an anti-freezing agent and/or salt to prevent freezing) can be circulated through the solar tower heat exchanger releasing its heat into the space via the same mirrors used during the day to focus solar heat into the heat exchanger of the central tower. The same is true for conventional liner focusing mirrors which can be used to remove the heat from the cold reservoir into the space.

One advantage of radiative concentrated cooling is that during cooling operation the mirrors do not need to be moved to track the Sun but simply project the image of the radiator straight up through the atmosphere.

A further aspect of the present invention is a method of operating a solar heat powerplant as described above.

**List of figures**

Fig. 1 shows an embodiment of the solar heat powerplant according to the present invention wherein a single heat exchanger is provided for the hot reservoir and the cold reservoir.

Fig. 2 shows an embodiment of the heat powerplant according to the present invention wherein each of the hot reservoir and the cold reservoir is provided with its own radiative heat exchanger.

Fig. 3 shows a schematic plan of a heat reservoir and a heat exchanger placed into the ground.

Fig. 4 describes fundamental thermodynamic features of a powerplant according to the prior art (a) and a powerplant according to the present invention (b).

Fig. 5 shows the basic construction of an embodiment of a heat reservoir according to the present invention.

Fig. 6 shows the basic construction of an embodiment of a radiative heat exchanger according to the present invention.

Fig. 7 is an illustrative world map of global horizontal solar irradiation.

Fig. 8 shows an embodiment of small-size radiative heat exchanger panels according to the present invention.

Fig. 9 shows an embodiment of a radiative heat exchanger panel according to the present invention adapted to provide a house with water heating, space heating, space cooling and electricity.

Fig. 10 shows an embodiment of a radiative heat exchanger for a roof covering in a form of roof tiles or shingles.

Fig. 11 shows an embodiment of a radiative heat exchanger in a form of a standing seam aluminum roofing.

Fig. 12 shows an embodiment of a solar heat powerplant with secondary heat exchangers inserted between the primary radiative heat exchanger and the hot and cold reservoirs.

## Detailed description

The present invention offers an improvement on the conversion of solar heat to electricity by utilizing the full cycle of radiative heat exchange due to Earth's rotation. Seemingly obvious, yet so eloquently and insightfully expressed by Roger Penrose, a mathematician, physicist, and cosmologists, and a Nobel Prize recipient, in one of his great interviews (https://www.youtube.com/watch?v=peNeFMmpmkc, see Chapter 4 starting at 19:35 minutes), is the fact that in principle (except for greenhouse effects of mostly $CO_2$ and methane) the net irradiation to the Earth is zero. What comes as solar heat during the day is removed by radiation into the space, mostly during the night. Net energy input is zero, but that is not the case with entropy. Irradiation by the sun arriving at the surface of the Earth from a small, hot object in the sky brings to the Earth less entropy than is released into the deep space at night from the relatively cold Earth. It is that difference in entropy flux that allows for the existence of all advanced forms of life on Earth.

None of the current solar heat conversion to electricity schemes makes use of the fact that radiative cooling into space - mostly at night - is there to be utilized. There is a partial utilization of that cycle because the air as a cold reservoir in dry cooling systems (K.P. Singh, et al., Dry cooling system for powerplants, US 10,161,683 B2) for the conventional power extraction does reflect the effects of radiative cooling but much of the potential is lost without an explicit design objective that includes radiative nighttime cooling. The same is true for proposed schemes to use soil as the cold reservoir instead of ambient air in dry cooling (Eduardo de la Rocha Camba and Fontina Petrakopoulou Earth-Cooling Air Tunnels for Thermal Power Plants: Initial Design by CFD Modelling, Energies 2020, 13, 797; doi:10.3390/en13040797). Soil averages out temperature oscillations of the daily cycle better than air, but the temperature of the cold heat reservoir is still not as low as it could be.

The present invention makes deliberate use of the full cycle of radiation by heating a hot reservoir during the day and by cooling a cold reservoir during the night. The thermal conversion generator can thus work with a larger difference in temperatures between the hot and cold storages and thus achieve higher efficiency. With these two reservoirs of sufficient capacitance, the generator can also function continuously and at a power level determined by the demand for electricity. The overall process can be viewed as rectification of radiative heat exchange, akin to AC-to-DC rectification.

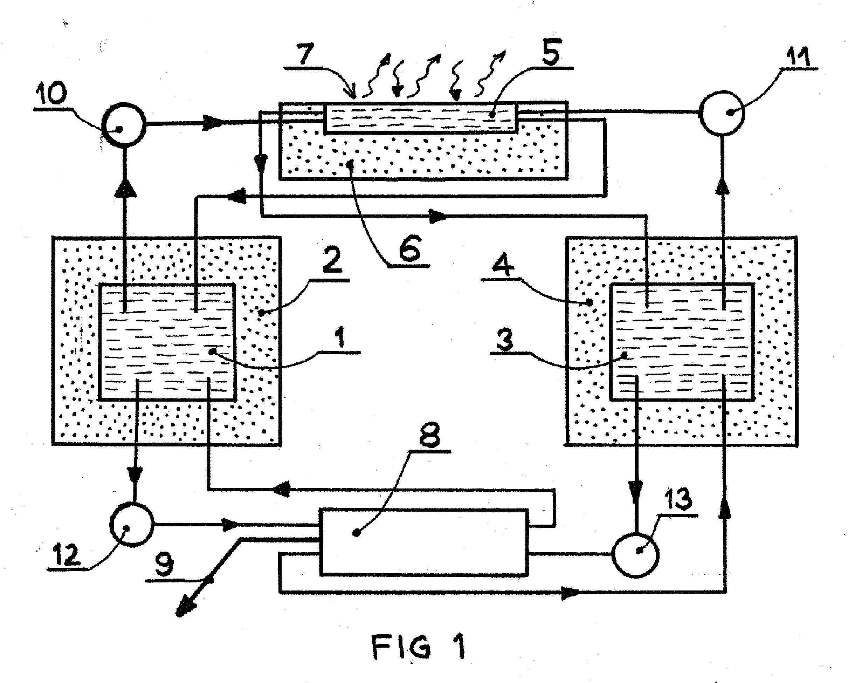

The basic components of the system according to the present invention are shown in Figure 1. Hot reservoir 1 is separated from the environment by thermal insulation 2. The cold reservoir 3 is provided with thermal insulation 4. The radiative heat exchanger 5 is also provided with thermal insulation 6, except at its radiative surface 7.

Power generator 8 extracts heat from hot reservoir 1 and releases residual heat into cold reservoir 3, with the net electric power output 9.

Heat between the heat exchanger 5 and the hot reservoir 1 is transferred by a closed-loop heat storage fluid - preferably water - moved by a pump 10. The same function is carried out by pump 11 for the cold reservoir 7.

The same heat storage fluid is moved by pump 12 between the hot reservoir 1 and the power generator 8. Another closed-loop circulation removes the rejected heat from the power generator 8 into the cold reservoir 3 by the pump 13.

Pumps 12 and 13 are operated as demanded by the power output 9, basically continuously.

Pump 10 is circulating the storage fluid between the radiative heat exchanger 5 and the hot reservoir 1 when the temperature of the heat exchanger is higher than that of the hot reservoir - primarily at daytime. Conversely, pump 11 is running only when the temperature of the heat exchanger 5 is lower than of the cold reservoir 3 - primarily at nighttime. For the efficient operation of the system, the total thermal capacities of the heat reservoirs 1 and 3 should be large - depending on the nominal power output 9 - while the thermal capacity of the heat exchanger 5 should be as low as possible.

The radiative surface 7 of the heat exchanger 5 should have as high emissivity as possible and be practical, but also affordable.

In certain embodiments, a concentrated solar heat powerplant design may be used to incorporate radiative cooling using the same irradiation concentration means, e.g., mirrors that are used to heat the heat exchanger at the top of a solar tower (or tubes of liner focus mirrors). The basic layout as shown in Fig. 1 can be used for that option. Thus, in certain embodiments, the radiative heat exchanger, e.g., as shown in Fig. 1 can be of concentrated solar heat type.

Radiative heat cooling has been extensively studied for many applications, including cooling of the buildings to reduce the costs and environmental impacts of conventional air-conditioning. Selectivity for high reflectivity (97%) of solar irradiation in the visible and near-infrared spectrum and for high emissivity in the mid-infrared spectrum (>90%) from 8 $\mu$m to 13 $\mu$m of the so-called atmospheric window has been demonstrated by photonic design using seven alternating layers of hafnium dioxide and silicon dioxide deposited on top of silver and titanium coatings on a silicon wafer substrate (A.P. Raman, M.A. Anoma, et al., Passive radiative cooling below ambient air temperature under direct sunlight, Nature vol 515, 27 Nov 2014). With this targeted photonic design, the temperature of the radiator could be reduced by about 5°C below ambient temperature even when directly exposed to peak solar irradiation of close to 900 W/m². The present invention circumvents the need for such sophisticated design by splitting the day and night radiative heat exchange processes, the split enabled with separate large-capacity heat reservoirs.

With perfect thermal insulations from the environment and zero power output, the temperature of the hot reservoir 1 would become equal to the highest temperature recorded by the heat exchanger 5 and the temperature of the cold reservoir 3 would become equal to the lowest temperature of the radiative heat exchanger 5. The thermal capacitance of the reservoirs depends on the desired electric power output 9 and the allowed temperature variations of the hot and cold reservoirs. The capacity for radiative heat exchange of the heat exchanger 5 (determined primarily by the area of its radiative surface and the geographic location of the power plant) must match the desired power output.

The type of power generator is preferably a conventional heat turbo machine operating with a suitable fluid in a closed system under appropriate pressure. Ammonia is most preferred, but there are other fluids, mostly those used, as ammonia, in existing refrigeration systems, e.g., R134a or R404A. Ammonia is used on a large scale for industrial cooling and has a very low impact on the environment - no effect on ozone and low potential for global warming. Ammonia is evaporated by heat extracted from the hot reservoir 1 and condensed by cooling against the cold reservoir 3. The maximum, theoretical efficiency of an ideal thermodynamic engine according to Carnot, is

$$\eta = (T_h - T_c)/T_h,$$

where $T_h$ is the absolute temperature (Kelvin) of the hot reservoir and $T_c$ of the cold reservoir.

*"Looking at this formula an interesting fact becomes apparent: Lowering the temperature of the cold reservoir will have more effect on the ceiling efficiency of a heat engine than raising the temperature of the hot reservoir by the* same *amount. In the real world, this may be difficult to achieve since the cold reservoir is often an existing ambient temperature"* (https://en.wikipedia.org/wiki/Carnot cycle).

The main innovation of the present invention stems from circumventing the last part of the quoted sentence "existing ambient temperature". Lowering the temperature of the cold reservoir by radiative cooling, as stated in the above quote, is of more benefit than increasing the temperature of the hot reservoir (by the same amount).

An embodiment of the present invention uses a thermoelectric generator (TEG) which has seen some real improvements in efficiency in the last decades (H. Jouhara, A. Zabnienska-Gora, et al., Thermoelectric generator (TEG) technologies and applications, International Journal of Thermofluids 9 (2021) 100063; K.B. Masood, P. Kumar, et al., Odyssey of thermoelectric materials: foundation of the complex structure, Journal of Physics Communications, 2 (2018) 062001; R. Bjork, K.K. Nielsen, The maximum theoretical performance of unconcentrated solar photovoltaic and thermoelectric generator systems, Energy Conversion and Management, 2017, 156, 264-268).

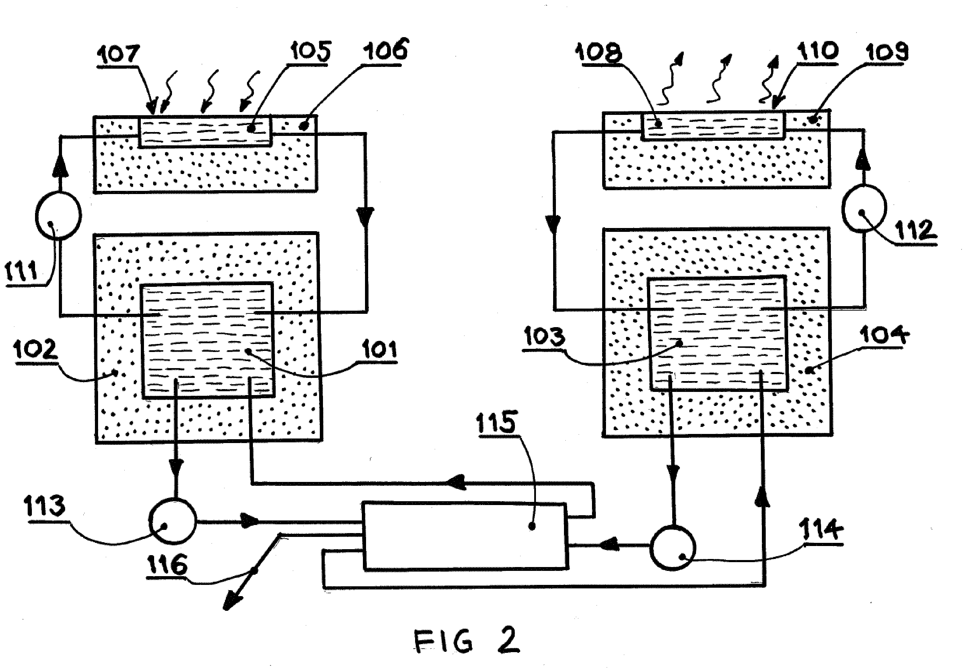

Another embodiment of the present invention is shown in Figure 2. In this embodiment, the hot reservoir 101, insulated from the environment by thermal insulation 102, is provided by a radiative heat exchanger 105, thermally insulated by 106, and absorbing solar heat by its surface 107. Pump 111 circulates water between the hot reservoir and the heat exchanger 105 when the temperature in the exchanger is higher than in the reservoir.

Conversely, the cold reservoir 103, with thermal insulation 104, radiates heat into space via radiative heat exchanger 108, enclosed by its thermal insulation 109, except at the radiative surface 110. Pump 112 circulates water between the cold reservoir 103 and exchanger 108 when the temperature in the exchanger is lower than in the reservoir.

The power generator 115 produces electrical power 116 by taking heat from the hot reservoir 101 via pump 113 and rejecting heat into the cold reservoir 103 via pump 114. Again, both pumps 113 and 114 and the generator are in continuous operation.

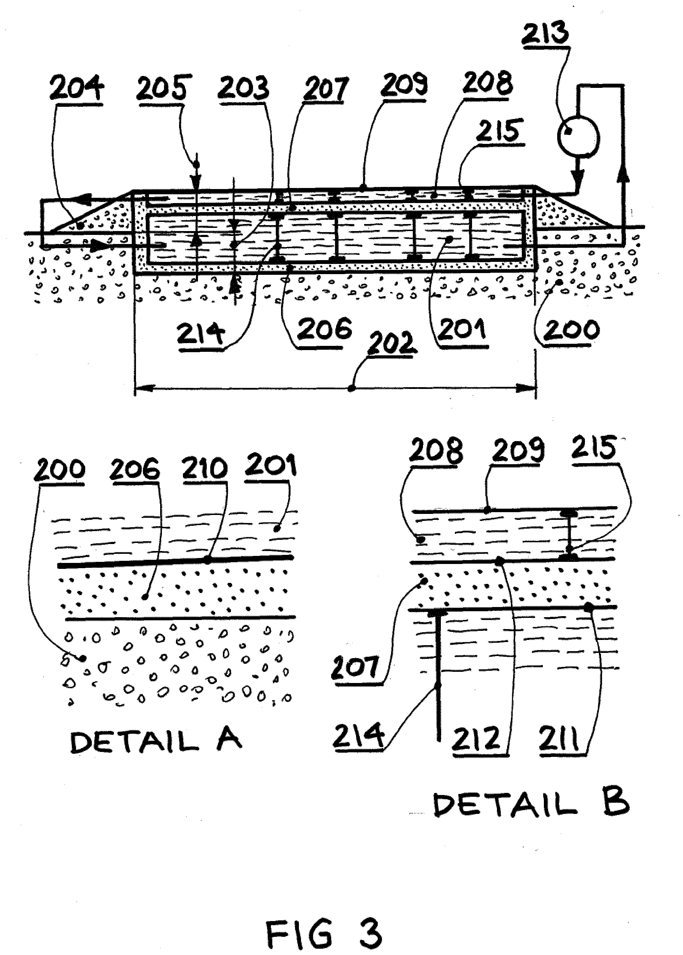

Figure 3 shows in more detail an embodiment of heat reservoirs and heat exchangers of Figure 2. The volume of water held in reservoir 201 is created by the excavation of a circular depression of diameter 202 in the soil 200. The soil excavated to a depth 203 is used to form a sloped, raised wall 204, adding to the depth of the reservoir an amount 205. The reservoir is thermally insulated from the ground by insulation 206 and from the radiator 208, by insulation 207. The radiating cover 209 encloses the volume of water in 208. The water in the system is fully enclosed. Shown in detail A is the insulation 206 which is sealed from the water in reservoir 201 by a water-tight barrier 210. Detail B shows the thermal insulation 207 separated from reservoir 201 with a barrier 211 and from the radiator 208 by a barrier 212. The radiating cover 209 may be kept at a distance from the thermal insulation 207 by posts 215, which in turn is kept at its height by posts 214.

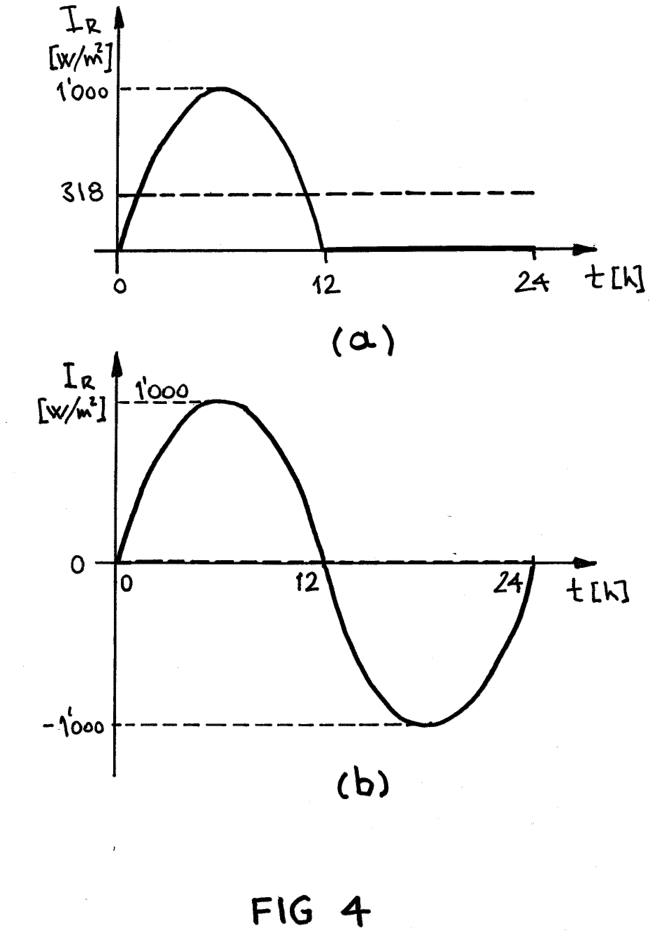

Figure 4 summarizes the core idea of the present invention. Shown on Figure 4a is the typical, idealized, solar heat conversion scheme. Irradiation intensity $I_R$ [W/m²] at the beginning of a day starts to increase from zero and reaches a maximum by midday of e.g., 1'000 W/m². At the end of the day, at 12 h, irradiation returns to zero and nothing happens during the next 12 hours because the plant is idled. If the shape of irradiation power is approximated by a sinus function, the level averaged over 24 hours is about 318 W/m². The amount of heat absorbed by the system is about 28 MJ/m².

Figure 4b shows the irradiation cycle according to the present invention. The first 12 hours are the same as in Figure 4a, but during the night hours, from 12 to 24 hours, radiative cooling into empty space removes the same amount of heat absorbed during the day. The net heat absorption is zero (see Penrose above). Of course, this must not be the case every single day, but that is what happens on average.

If the hot reservoir can be heated to e.g., 90°C and the cold reservoir cooled to e.g., 5°C, the Carnot limit would be 23.4%. By comparison, if the heat is rejected into surrounding air of e.g., 45°C (not unusual for the areas where solar heat power is being installed), the Carnot limit is 12.4%. The proposal by the authors of the study from Spain, referenced above, to use soil temperature of 20°C for the cold reservoir, yields a Carnot limit of 19.3%, exclusive of losses in heat transfer from the pipelines buried underground.

For concentrated solar heat systems, the hot temperature can be as high as 550°C with a central tower surrounded by mirrors on motorized positioners. Using surrounding air of 45°C for cooling gives a Carnot limit of 61.4%. Lowering the cooling temperature to 5°C by deploying the cold reservoir of the present invention, could increase the theoretical limit by about 5% to 66.2%.

Parabolic mirror concentrators operating with water can run at a peak temperature of 200°C. Dry cooling into surrounding air at 45°C, gives Carnot efficiency of 32.8%. Using the cold reservoir according to the present invention could increase the limit by 7.4% to 41.2%.

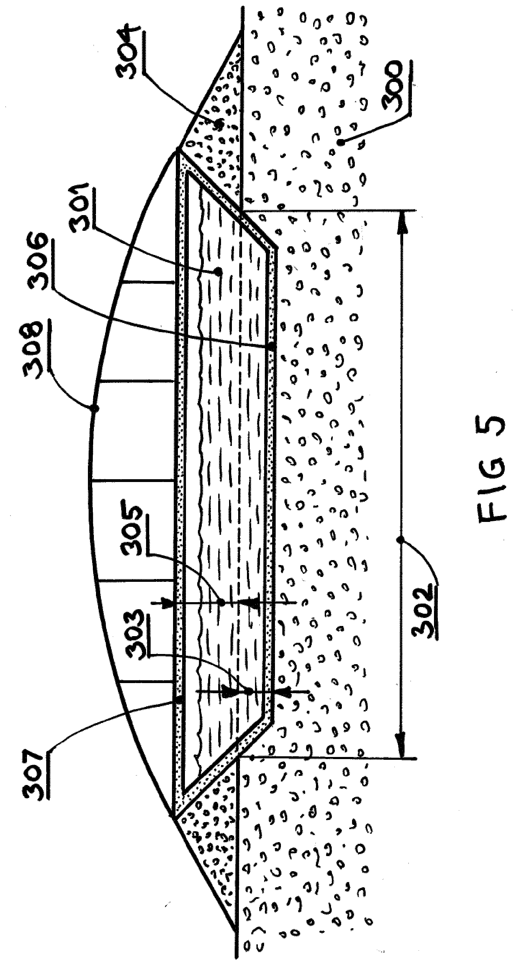

Figure 5 shows in more detail the construction of hot and cold reservoirs shown in Figure 1. The proportions are not shown to scale - horizontal scale is compressed. For a pilot power plant of approximately 1 MW, the diameter 302 of the reservoir 301 would be about 200 m. Excavating to the depth 303 of approximately 1 m into the ground 300 would allow for an increase 305 of the reservoir depth by about 2.5 m with the wall 304. The volume of the water in the reservoir filled to a depth of 3 m would be approximately 100'000 m³, with the thermal capacity of 420 GJ/K (Giga Joules per Kelvin).

Extracting 1 MW of continuous work at 20% efficiency would call for heat flux from the hot reservoir of 5 MW. At 10% efficiency, the heat flux would have to be 10 MW. Expressed as the total heat during a 24-hour day, this would be 430 GJ and 860 GJ, respectively. Solar irradiation under ideal conditions could deliver 880 GJ to a heat exchanger of the same diameter as the reservoir, i.e., enough to produce 1 MW output even with the lower efficiency of 10%. With the thermal capacity of 420 GJ/K, the reservoir temperature drop during the 12 hours of night operation would be only about 1 degree Kelvin (Celsius) for a 10% thermodynamic cycle efficiency. With no solar power input during one whole day, the drop would double to 2 K. Theoretical efficiency would be reduced by about 5%. The operation could continue with still good performance for a week of poor solar irradiation. With the reservoirs of about half of this capacity i.e., of about 200 GJ/K, the theoretical efficiency -- and thus the output power -- after a day of no solar irradiation would be reduced to about 90% of the nominal. These are very rough estimates, ignoring e.g., losses through imperfect thermal insulations and power for pumps to circulate water through the reservoirs and the radiative heat exchanger, as well as the generator.

Thermal insulation 306 must also provide sealing against water incursion from the ground 300 (however unlikely in locations adequate for this type of solar powerplant) and from the water in the reservoir 301. The cover or the lid 307 of the reservoir is also water and water vapor tight and thermally insulating. It could be suspended off arches 308 spanning the opening of reservoir 301. The structure of arches may be used to provide support for a thin covering by a foil transparent to radiation in the mid-infrared (8 μm to 13 μm) but preventing convective, parasitic heat transfer from the atmospheric air. Parasitic heat transfer from atmospheric air by all mechanisms (conduction, convection, and radiation) diminishes the effectiveness of both, hot and cold storage, as well as of the radiative heat exchanger.

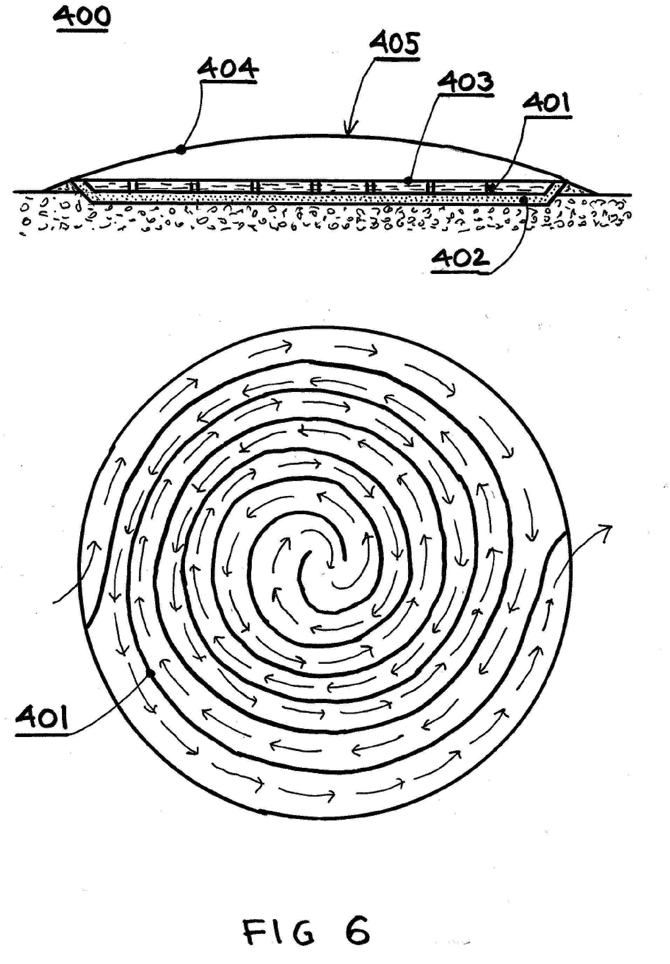

A preferred embodiment of the radiative heat exchanger 400 shown in Figure 6 has features similar to the heat reservoir shown in Figure 5, with the water volume kept to a minimum. The excavation is only to level the ground and to accommodate the thermal insulation 402. The flow of water through the exchanger by the action of pumps 10 or 11 is defined by a pattern of walls 401 between the bottom thermal insulation 402 and the top cover 403. These walls may also support the cover 403 of the heat exchanger. The main features of cover 403 are high emissivity into the environment and prevention of water or water vapor escape. An anodized aluminum sheet is a preferred choice. A black painted aluminum sheet is another preferred choice. Arches 404 over the heat exchanger are not needed to suspend the cover 403, which now is supported from below by walls 402 and is in direct contact with water, but it can be used to support a polymeric foil 405 reducing heat transfer to the surrounding air by convection without impacting radiative heat transfer.

According to the present invention, the solar heat conversion efficiency can be improved by the utilization of radiative cooling during night hours in conjunction with a large cold reservoir. In certain embodiments, identical hot and cold reservoirs are provided, e.g., as exemplified by Figure 5, in combination with a radiative heat exchange, e.g., as shown in Figure 6, and a conventional power generator, e.g., with ammonia as working fluid, to convert heat into electricity.

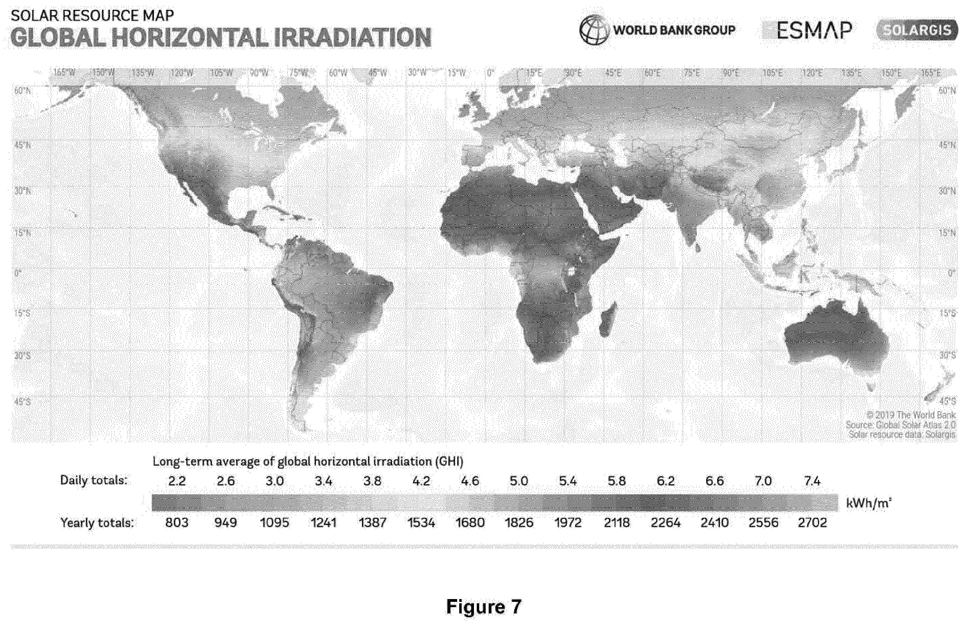

Regarding ideal locations for the power plants according to the present invention, consider Figure 7 that shows global horizontal irradiation on a world map. Daily totals are shown in kWh/m$^2$. Areas of high solar irradiance, low cloud cover, low humidity, low precipitation, with flat and solid ground, are ideal and, unfortunately, plentiful. Inner Australian continent, some of the Middle East sand-free land, American South-West, African sub-Saharan territories, high, and dry plains of South American continent meet all these criteria. A very small fraction of these areas is needed to provide ALL energy needs for all the world.

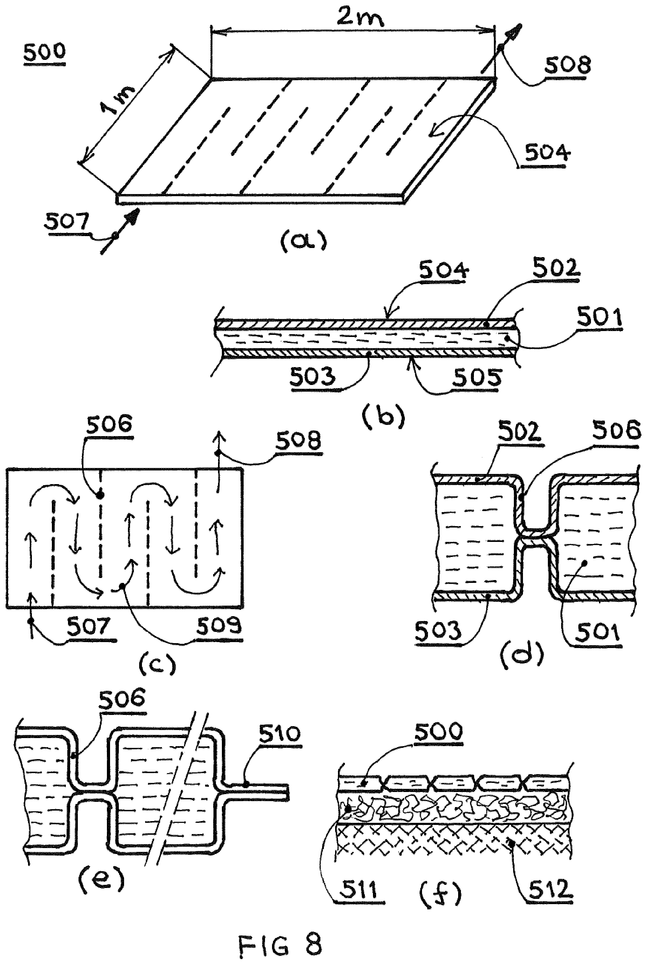

Figure 8 shows another embodiment of the invention with the crucial component of the proposed system in a form of a panel 500 for radiative heat exchange. The size of such a typical panel is comparable to that of a PV panel, i.e., about 2 m long by about 1 m wide, shown in perspective view on Figure 8(a). The panel comprises an enclosed volume 501 for heat transferring fluid, e.g., water, with an upper plate 502 and a lower plate 503, Figure 8(b). The outer surface 504 of the upper plate is characterized by high emissivity covering the spectrum from ultraviolet (0.3 $\mu$m) to mid-range infrared radiation (up to at least 15 $\mu$m). It is thus absorbing most of the solar heat radiation, including that of the atmosphere, while also radiating heat in the "so-called" atmospheric window from about 8 $\mu$m to 13 $\mu$m. The outer surface 505 of the lower plate 503 has high reflectivity. Both the upper and the lower plate can be made in aluminum. Simple anodizing of the upper plate can greatly increase emissivity while the lower plate left as rolled has high reflectivity. Ideally, the outer surface 504 would be black in color, e.g., painted black. The fluid flow 509 from the fluid inlet 507 to the fluid outlet 508 is guided by ribs 506 protruding from the opposing plates 502 and 503, Figures 8(c) and 8(d). The ribs 506 also increase the stiffness of the plates and are bonded, as are the edges 510 of the plates 502 and 503, Figure 8(e).

For a large scale-facility, akin to solar PV plates or the parabolic mirrors of the concentrated heat type, thousands of the panels 500 can be interconnected by piping and laid down on the ground 512 covered by thermal insulation 511, made from e.g., fiberglass (glass wool), Figure 8(f).

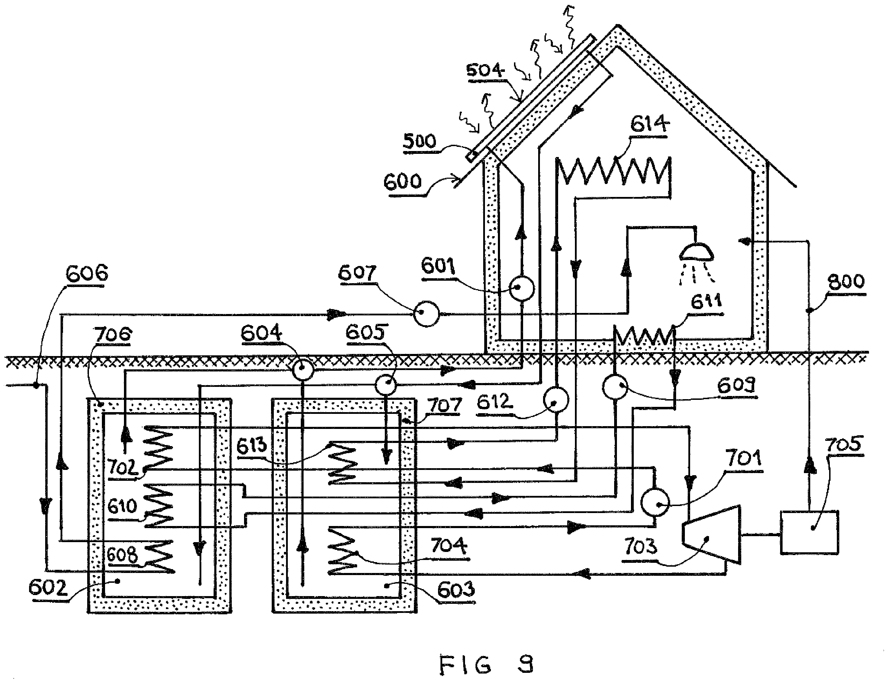

In a further embodiment, radiator panels 500 can be used for small-scale applications, e.g., for installation on roofs of houses, as shown in Figure 9. Several radiator panels 500 are mounted on the roof side 600 exposed to solar radiation. There are two reservoirs connected to the radiator panels 500 with a pump and valves. The fully enclosed heat transfer fluid is circulated by the pump 601 between the hot reservoir 602 and the radiator plates 500 if and only if the temperature in the radiator is higher than in the hot reservoir 602. The connectivity is controlled by the three-way valves 604 and 605. The pump 601 also runs if and only if the temperature in the radiator panels 500 is lower than in the cold reservoir 603. With this simple control algorithm, the same, highly emissive surface 504 of the radiator panels 500 provides an optimum radiative heat exchange that adds heat to the hot reservoir 602 mostly during the solar, daytime irradiation, and removes heat from the cold reservoir 603 by radiative cooling at nighttime.

The heat stored in the hot reservoir can be used to heat water for the warm water needs of the house. The water mains 606 is connected to e.g., shower, via heat exchanger 608 via pump 607.

Another closed circulation provides indoor space heating to the house. Pump 609 circulates water through a heat exchanger 610 and floor heating tubing 611.

Yet another closed circulation provides for indoor space cooling. Pump 612 circulates water through a heat exchanger 613 in the cold reservoir and ceiling cooling panels 614. The roof side facing away from the sun can also be used to increase radiative heat transfer for cooling, especially in geographic locations where need for cooling power exceeds all other uses.

In addition to warm water, indoor space heating, and indoor space cooling a thermodynamic system operates between the hot and cold reservoirs to provide electricity for the house (and possibly for the grid). A suitable medium, e.g., ammonia, is pumped (in fluid state) by compressor 701 through heat exchanger 702 in the hot reservoir where it is vaporized (under high pressure) and led into turbine 703. An alternative to a conventional type of turbine is bladeless, Tesla-type turbine or a screw-type expander described by e.g., Kuwabara et al. (Hideaki Kuwabara, Makoto Nishimura, Masaki Matsukuma, and Takayoshi Matsui, Micro Steam Energy Generator, Kobelco Technology Review No. 29 Dec. 2010).

Low-pressure vapor is condensed in condenser 704 and led to compressor 701. The closed-circuit filled with medium, e.g., ammonia, operates at an increased pressure, e.g., on the order of 10 to 30 bar. Turbine 703 runs generator 705 that supplies electricity 800 to the house. With temperatures of 80 to 90°C in the hot reservoir and 5 to 10°C in the cold reservoir, the ideal thermodynamic efficiency exceeds 20%. With the losses in the real system the efficiency of 5 to 10% can be achieved, which is still of real interest in reducing or eliminating the need for grid power. An alternative to turbine/generator is a thermoelectric generator mentioned earlier.

The balance of different functions depends greatly on the geographic location and weather conditions throughout the year. The capacity of the reservoirs is very important for smooth operation during a 24-hour period. The same is true of thermal insulations 706 and 707. For a medium-size house in a moderate climate, the reservoirs should hold about 10 to 15 m$^3$ of water each. Since there are no losses of water in the system, the cost of water is of little concern - the total volume is about the size of a small swimming pool. Placing the reservoirs underground seems the best choice, using steel, aluminum, or fiberglass for the containers.

For new houses, it would be preferable to use radiator panels 500 as the primary roof covering with thermal insulation placed directly under the panels.

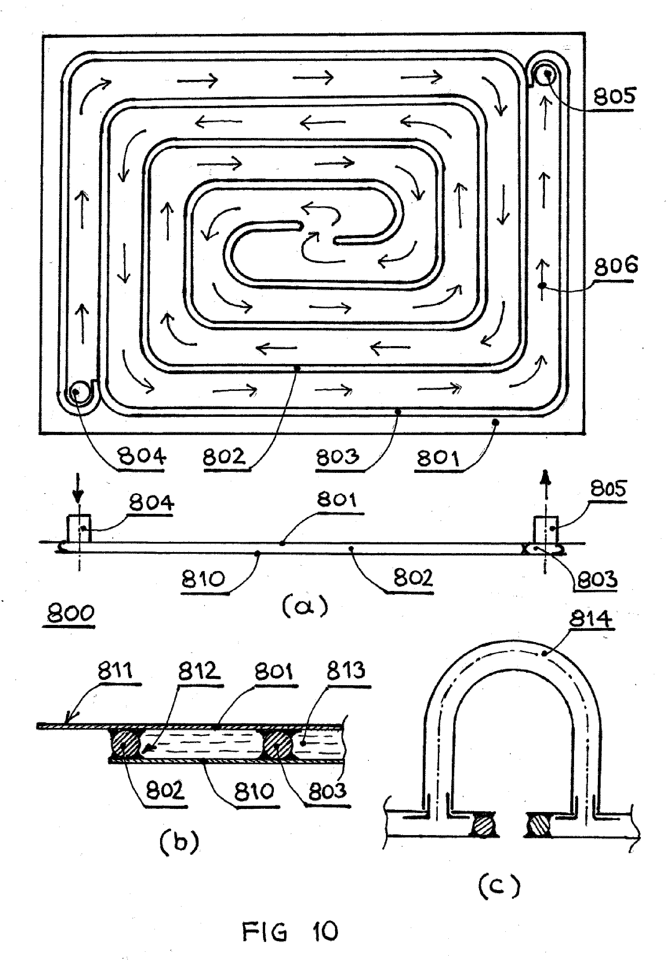

Figure 10a shows an embodiment of a radiative heat exchanger 800 in the form of roofing tiles, or shingles. The preferred material is aluminum, routinely used for some of the best performing roofing. The tile comprises two sheets 801 and 810 of aluminum spaced apart by a set of wires, e.g., round aluminum wires 802 and 803. These wires may be identical in shape and size, but one is flipped over about two axes so that when bonded to the cover plates 801 and 810 as shown by 812, a channel 813 for fluid flow 806 is formed connecting the inlet 804 to outlet 805.

A partial cross-section is shown in Figure 10b. The upper 801 and lower 810 plates are spaced apart by wires, e.g., round wires 802 and 803, bonded to the plates by a suitable bonding compound 812. The preferred bonding materials are epoxy or polyurethane adhesives. Heat transfer fluid 813 is preferably water, or water with salt added to reduce the risk of freezing. Individual tiles may be interconnected by U-shaped tubes, e.g., aluminum tubes 814, shown in Figure 10c. The thickness of the aluminum sheet used for plates 801 and 810, is preferably about 0.4 mm to about 0.8 mm, more preferably 0.5 mm, 0.6 mm, or 0.8 mm, 0.5 mm being most preferred. The diameter of the wires 802 and 803 is preferably from about from 4 to about 6 mm, most preferably about 5 mm. The top surface of tiles 800 is preferably painted black with a resistant, highly emissive paint. The lower plate is best left in its as-rolled condition with high reflectivity surfaces.

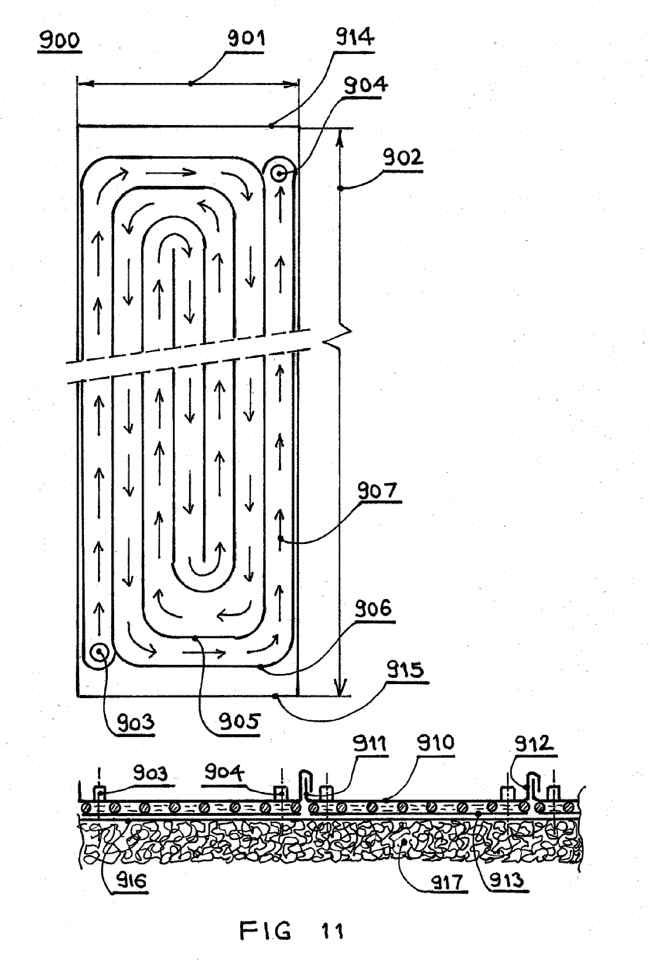

Figure 11 shows yet another embodiment of a metal roofing in the form of long, narrow elements 900. Such panels of standard widths (e.g., 300, 350, 400, or 450 mm) are used as the highest performance roofing for residential and commercial houses/buildings. The length 902 is made to fit the application, typically running the full width of the roof. In the embodiment of the present invention, the upper plate 910 is spaced apart from the bottom plate 913 by a set of wires 905 and 906, creating a channel for fluid flow 907 connecting the inlet 903 to outlet 904. The adjacent channels carry the flow 907 in opposite directions which contributes to a more uniform temperature of the heat exchanger surface for both heating and cooling functions. A partial cross-section shows the typical raised seam construction of the panels wherein one side of the panels is simply bent upwards, shown as lip 911, wherein the other side is doubly bent to cover the lip 911 with a sealing cover 912. The most common design of this roofing style is a so-called snap-fit, standing seam. The panels are laid on top of a water-tight, preferably reflective foil 916, covering the thermal insulation 917.

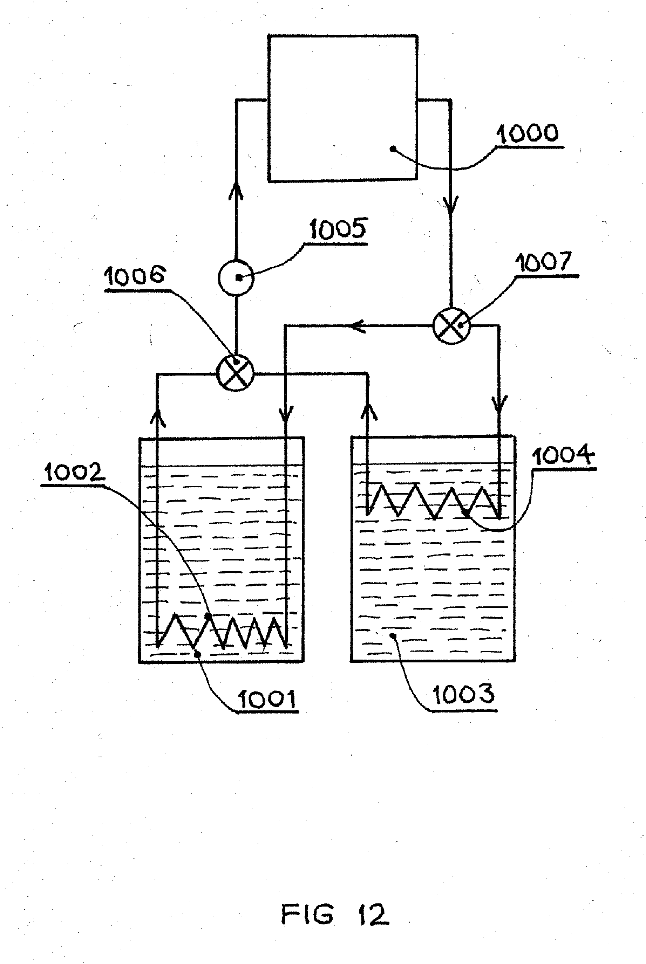

Figure 12 shows yet another embodiment wherein a primary radiative heat exchanger 1000 is separated from a hot reservoir 1001 by a secondary heat exchanger 1002 and from the cold reservoir 1003 by a secondary heat exchanger 1004. The fluid transferring heat out of or into the primary radiative heat exchanger 1000 is now confined to a relatively small volume. The pump 1005 and the valves 1006 and 1007 control connectivity and/or fluid flow between the heat exchangers 1000 and 1002 or 1004. The small volume of fluid within the heat exchangers allows for use of additives, e.g. an anti-freezing agent, to the water to both suppress the freezing point and elevate the boiling point of the fluid circulating through the radiative heat exchanger. For example, a 50/50 (v/v) mixture of water and ethylene glycol as anti-freezing agent has a freezing point at -37°C and a boiling point at 106°C. With the risks of freezing or boiling of the fluid within the radiative heat exchanger circuit practically eliminated in most weather conditions, the temperatures in the hot and cold reservoirs can be held very close to boiling and freezing points of water, e.g., at 99°C and 1°C. With these temperatures the theoretical efficiency can be increased by almost 3% from 23.4% (with temperatures of 90°C and 5°C in the hot and cold reservoirs) to 26.3%. This may at least partially offset losses due to insertion of secondary heat exchangers 1001 and 1003. To facilitate water mixing in the reservoirs, secondary heat exchanger 1002 may be be placed deep in the hot reservoir 1001, and secondary heat exchanger 1004 may be placed near the top of the cold reservoir 1003.

Fresh ideas and actions are urgently needed at this moment in history, a few days before the COP26 UN Climate Change Conference in Glasgow, with acute energy shortages affecting even the largest, developed economies. In short term, whatever declarations will emerge from the COP26, there will be renewed calls for increasing fossil fuel use.

Transition to a greener world is in huge jeopardy with further delays on the horizon.

**Claims**

1. A solar heat powerplant comprising:

   - a first heat reservoir which is a cold reservoir,
   - a second heat reservoir which is a hot reservoir,
   - at least one heat exchanger adapted for radiative dry cooling of the cold reservoir and/or for radiative heating of the hot reservoir by absorbing solar irradiation, and
   - a power generator which operates by extracting heat from the hot reservoir and transferring residual heat into the cold reservoir.

2. The solar powerplant according to claim 1, which is adapted for providing the heat transfer between the heat exchanger for radiative cooling and the cold reservoir only when the temperature in the heat exchanger is lower than in the cold reservoir.

3. The solar powerplant according to claim 1 or 2, which is adapted for providing the heat transfer between the heat exchanger for radiative heating and the hot reservoir only when the temperature in the heat exchanger is higher than in the hot reservoir.

4. The solar powerplant according to any one of claims 1 to 3, which comprises a single heat exchanger for the cold reservoir and the hot reservoir and wherein the powerplant is preferably adapted for providing an alternating heat transfer between the heat exchanger and the hot reservoir during daytime and the heat exchanger and the cold reservoir during nighttime.

5. The solar powerplant according to any one of claims 1 to 3, which comprises a first heat exchanger for the cold reservoir and a second heat exchanger for the hot reservoir.

6. The solar powerplant according to any one of claims 1 to 5, wherein the thermal capacity of the cold reservoir and the hot reservoir is sufficient to support a continuous operation of the power generator during at least a full day of no solar irradiation with at least 90% of its nominal power.

7. The solar powerplant according to any one of claims 1 to 6, wherein the heat exchanger is a radiative heat exchanger.

8. The solar heat powerplant according to any one of claims 1 to 7, wherein the heat exchanger is in the form of a panel comprising an upper element, e.g., plate or sheet, and a lower element, e.g., plate or sheet, wherein the upper element is made from a metal or a metal alloy, e.g., aluminum or an aluminum alloy of high emissivity, preferably an anodized, more preferably black painted aluminum or aluminum alloy, and the lower element is made from a metal or a metal alloy, e.g., aluminum or an aluminum alloy of high reflectivity, preferably a rolled or polished aluminum or aluminum alloy.

9. The solar powerplant according to any one of claims 1 to 8, wherein the power generator comprises a working fluid, e.g., a liquid or a gas, for converting thermal energy directly or indirectly into electrical energy, wherein the working fluid is preferably ammonia or a halo-substituted hydrocarbon such as R134A or a mixture of halo-substituted hydrocarbons such as R404A.

10. The solar powerplant according to any one of claims 1 to 9, wherein the power generator is a thermoelectric power generator.

11. The solar powerplant according to any one of claims 1 to 9, wherein the power generator comprises a screw-type expander, or a bladeless, Tesla-type turbine.

12. The solar powerplant according to any one of claims 1 to 11, which is adapted for use in houses or buildings.

13. The solar powerplant according to any one of claims 1 to 12, wherein the hot reservoir is additionally adapted for heating applications, e.g., for heating water and indoor space, and/or wherein the cold reservoir is additionally adapted for cooling applications, e.g., for cooling indoor space.

14. The solar powerplant according to any one of claims 1 to 13 comprising at least one primary heat exchanger, which is in direct contact with the exterior, and at least one secondary heat exchanger which is in contact with the primary heat exchanger and the hot and/or cold reservoir wherein the heat storage fluid within the radiative heat exchanger is separated from the fluid in the hot reservoir and/or the cold reservoir.

15. The solar powerplant according to any one of claims 1 to 14, further comprising irradiation concentration means for providing concentrated heat irradiation to a heat exchanger, and/or for providing concentrated radiative cooling from a heat exchanger.

16. A method of operating a solar heat powerplant according to any one of claims 1 to 15.

FIG 1

EP 4 177 536 A1

FIG 2

FIG 3

FIG 4

FIG 5

FIG 6

Figure 7

FIG 8

FIG 9

805
806

804  802  803  801

804  801  805

810  802  803

800

(a)

811  812  801  813

802  810  803

(b)

814

(c)

FIG 10

FIG   11

FIG 12

Europäisches
Patentamt

European
Patent Office

Office européen
des brevets

## EUROPEAN SEARCH REPORT

Application Number

EP 21 20 6240

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 054 128 A (RILETT J W) 11 February 1981 (1981-02-11) * figure 3 * * claim 50 * ----- | 1-3,5,7, 8,11,16 | INV. F24S10/50 F24S60/10 F24S60/30 F24S90/00 |
| X | US 2010/101621 A1 (XU JUN [US]) 29 April 2010 (2010-04-29) * figure 2 * * paragraph [0092] * * paragraph [0108] * * paragraph [0116] * * paragraph [0128] * ----- | 1,3, 7-13,15, 16 | |
| X | US 2004/244376 A1 (LITWIN ROBERT Z [US] ET AL) 9 December 2004 (2004-12-09) * figures * ----- | 1,3,4,7, 9,10,15, 16 | |
| X | US 2004/118449 A1 (MURPHY TERRENCE H [US] ET AL) 24 June 2004 (2004-06-24) * figures * ----- | 1,3,4,7, 9,10,15, 16 | TECHNICAL FIELDS SEARCHED (IPC) F24S |

The present search report has been drawn up for all claims

| Place of search | Date of completion of the search | Examiner |
|---|---|---|
| The Hague | 6 April 2022 | Fernandez Ambres, A |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                                   
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 20 6240

This annex lists the patent family members relating to the patent documents cited in the above-mentioned European search report.
The members are as contained in the European Patent Office EDP file on
The European Patent Office is in no way liable for these particulars which are merely given for the purpose of information.

06-04-2022

| Patent document cited in search report | | Publication date | Patent family member(s) | | Publication date |
|---|---|---|---|---|---|
| GB 2054128 | A | 11-02-1981 | NONE | | |
| US 2010101621 | A1 | 29-04-2010 | CN | 101599722 A | 09-12-2009 |
| | | | CN | 201345627 Y | 11-11-2009 |
| | | | US | 2010101621 A1 | 29-04-2010 |
| US 2004244376 | A1 | 09-12-2004 | NONE | | |
| US 2004118449 | A1 | 24-06-2004 | US | 2004118449 A1 | 24-06-2004 |
| | | | US | 2006179840 A1 | 17-08-2006 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3312054 A, J.H. Anderson, J.H. Anderson JR
- US 10161683 B2, K.P. Singh

**Non-patent literature cited in the description**

- **B. SHIVA KUMAR ; K. SUDHAKAR.** Performance evaluation of 10 MW grid connected solar photovoltaic power plant in India. *Energy Reports,* 2015, vol. 1, 184-192
- **F. FERRONI ; R.J. HOPKIRK.** Energy Return on Energy Invested (EROEI) for photovoltaic solar systems in regions of moderate insolation. *Energy Policy,* 2016, vol. 94, 336-344
- **F. FERRONI ; A. GUEKOS ; R.J. HOPKIRK.** Further considerations to: Energy Return on Energy Invested (EROEI) for photovoltaic solar systems in regions of moderate insolation. *Energy Policy,* 2017, vol. 107, 498-505
- **EDUARDO DE LA ROCHA CAMBA ; FONTINA PETRAKOPOULOU.** Earth-Cooling Air Tunnels for Thermal Power Plants: Initial Design by CFD Modelling. *Energies,* 2020, vol. 13, 797
- **A.P. RAMAN ; M.A. ANOMA et al.** Passive radiative cooling below ambient air temperature under direct sunlight. *Nature,* 27 November 2014, vol. 515
- **H. JOUHARA ; A. ZABNIENSKA-GORA et al.** Thermoelectric generator (TEG) technologies and applications. *International Journal of Thermofluids,* 2021, vol. 9, 100063
- **K.B. MASOOD ; P. KUMAR et al.** Odyssey of thermoelectric materials: foundation of the complex structure. *Journal of Physics Communications,* 2018, vol. 2, 062001
- **R. BJORK ; K.K. NIELSEN.** The maximum theoretical performance of unconcentrated solar photovoltaic and thermoelectric generator systems. *Energy Conversion and Management,* 2017, vol. 156, 264-268
- **HIDEAKI KUWABARA ; MAKOTO NISHIMURA ; MASAKI MATSUKUMA ; TAKAYOSHI MATSUI.** Micro Steam Energy Generator. *Kobelco Technology Review,* December 2010